# FASCICULE DE BREVET EUROPEEN

(11) **EP 2 418 753 B1**
(45) Date de publication et mention de la délivrance du brevet: **05.11.2014**
(21) Numéro de dépôt: 11306015.6
(22) Date de dépôt: 05.08.2011
(51) Int. Cl.: H02J 7/34, H02M 1/00

(54) **Système de conversion d'énergie électrique**
Stromumwandlungssystem
System for converting electric power

(30) Priorité: 10.08.2010 FR 1003327
(43) Date de publication de la demande: 15.02.2012
(73) Titulaire: Thales, 92200 Neuilly Sur Seine (FR)
(72) Inventeur: Klein, François, 26027 Valence Cedex (FR); Taurand, Christophe, 26027 Valence Cedex (FR)
(74) Mandataire: Blot, Philippe Robert Emile

(56) Documents cités:
- FR-A1- 2 895 167
- US-A1- 2006 139 819
- US-A1- 2009 260 668
- CACCIATO M ET AL: "A critical evaluation and design of bi-directional DC/DC converters for super-capacitors interfacing in fuel cell applications", INDUSTRY APPLICATIONS CONFERENCE, 2004. 39TH IAS ANNUAL MEETING. CONFE RENCE RECORD OF THE 2004 IEEE SEATTLE, WA, USA 3-7 OCT. 2004, PISCATAWAY, NJ, USA,IEEE, vol. 2, 3 octobre 2004 (2004-10-03), pages 1127-1133, XP010735146, DOI: DOI:10.1109/IAS.2004.1348554 ISBN: 978-0-7803-8486-6
- KE JIN ET AL: "Hybrid Full-Bridge Three-Level LLC Resonant Converter- A Novel DC-DC Converter Suitable for Fuel Cell Power System", POWER ELECTRONICS SPECIALISTS CONFERENCE, 2005. PESC '05. IEEE 36TH, IEEE, PISCATAWAY, NJ, USA, 1 janvier 2005 (2005-01-01), pages 361-367, XP031000201, ISBN: 978-0-7803-9033-1

## Description

La présente invention concerne un système de conversion d'énergie électrique.

Un exemple d'un tel système peut être trouvé dans le document US 2009/0260668 qui décrit un système conforme au préambule de la revendication 1.

Plus particulièrement, le système selon l'invention peut trouver des applications dans le cadre d'une conversion d'énergie d'un réseau d'énergie primaire alternatif ou continu vers un réseau intermédiaire ou de sortie continu. Des systèmes de ce type sont par exemple connus sous le nom de conditionneurs de réseaux.

Ce type de systèmes de conversion trouve des applications par exemple dans des réseaux d'alimentation embarqués notamment à bord d'aéronefs.

Bien entendu, d'autres applications peuvent être envisagées.

Dans ce type d'applications, on cherche à obtenir un certain nombre de caractéristiques particulières.

En effet, de tels systèmes doivent présenter une certaine transparence aux microcoupures du réseau d'énergie primaire. Dans ce cas, l'énergie permettant cette caractéristique est stockée dans un dispositif capacitif de stockage d'énergie, par exemple de type condensateur électrochimique aluminium.

Bien entendu, on peut également utiliser pour cette fonction d'autres types de moyens de stockage d'énergie comme par exemple des batteries.

Une autre caractéristique recherchée est le filtrage passe-bas, c'est-à-dire à moyennage, des appels de courant générés par les charges finales, à l'aide par exemple du même dispositif capacitif de stockage d'énergie.

Ce filtrage empêche alors la pollution du réseau d'énergie primaire par des appels de courant de fréquence trop élevée.

Une telle caractéristique est particulièrement importante dans les réseaux avioniques notamment en raison des nouvelles normes électriques applicables.

Différentes solutions permettant de résoudre ces problèmes ont déjà été proposées dans l'état de la technique.

Ainsi, par exemple, on a déjà proposé dans l'état de la technique d'utiliser un dispositif de stockage d'énergie capacitif directement placé sur le réseau intermédiaire.

La tension du réseau intermédiaire est alors régulée par un convertisseur primaire. Les appels de courant des convertisseurs finaux c'est-à-dire ceux connectés en sortie de celui-ci sont filtrés par la caractéristique courant/tension du dispositif de stockage d'énergie, c'est-à-dire par l'impédance des condensateurs.

Afin de profiter du maximum d'énergie stockée dans la réserve d'énergie, les convertisseurs finaux travaillent sur une plage de tension étendue, par exemple entre la tension nominale du réseau intermédiaire et la moitié de cette tension.

Ainsi lors d'une microcoupure, le convertisseur primaire ne fournit plus de puissance. L'énergie est alors délivrée par le dispositif capacitif de stockage d'énergie.

La tension du réseau intermédiaire décroît de façon naturelle, en fonction du courant appelé par les convertisseurs finaux, du temps et de la capacité.

Cependant une telle structure présente un certain nombre d'inconvénients.

En effet, on ne peut pas utiliser le dispositif capacitif de stockage d'énergie à son maximum de densité énergétique. L'optimum de tension d'utilisation pour des condensateurs électrolytiques aluminium est d'environ 100 volts. Utiliser cette tension comme tension nominale de réseau intermédiaire entraîne alors un surdimensionnement des convertisseurs finaux, des rendements non optimums sur ceux-ci ainsi que des contraintes d'isolement.

Par ailleurs, et afin d'obtenir une bonne densité énergétique du dispositif de stockage capacitif d'énergie, la tension du réseau intermédiaire ne peut pas être trop basse. De façon typique, on choisit une tension proche de 35 volts. Une telle tension est un inconvénient pour des convertisseurs finaux de basse tension en terme de rendement.

Enfin pour pouvoir recharger la réserve d'énergie tout en fournissant la puissance utile en fin de microcoupure, le convertisseur primaire doit disposer d'une caractéristique de sortie à puissance constante sur toute la gamme de tension de sortie. La topologie à accumulation également connue dans l'état de la technique sous l'appellation anglaise de « Flyback » est alors la seule possible si l'on veut éviter un surdimensionnement de ce convertisseur.

On a également proposé dans l'état de la technique d'utiliser des réserves d'énergie sur un réseau intermédiaire et un convertisseur d'extension.

Une telle structure est par exemple décrite dans le document FR 2 895 167 au nom de la demanderesse.

Ainsi et afin de résoudre le premier problème évoqué précédemment, c'est-à-dire l'impossibilité d'utiliser le dispositif de stockage d'énergie à son optimum de densité énergique, on ajoute un convertisseur bidirectionnel également appelé chargeur, permettant de faire le lien entre le réseau intermédiaire et un réseau de stockage d'énergie.

Le chargeur régule alors la tension du réseau de stockage d'énergie afin qu'elle soit proportionnelle à celle du réseau intermédiaire. On peut ainsi utiliser des condensateurs électrolytiques aluminium à 100 volts sur le réseau de stockage d'énergie, sans impact sur le reste de la conception.

Cependant, cette solution n'est pas optimale car elle ajoute un convertisseur à un ensemble déjà complexe et laisse entier le problème de la dynamique d'entrée des convertisseurs finaux.

Une autre solution consiste à placer la réserve d'énergie sur un étage intermédiaire et à réguler le réseau à l'aide d'un convertisseur bidirectionnel additionnel appelé régulateur.

Dans l'état de la technique, cette architecture est très souvent utilisée pour des alimentations à correcteur de facteur de puissance également connue sous l'appellation PFC à deux étages à savoir un étage élévateur et un étage isolateur.

La tension du réseau intermédiaire est continue et constante dans toutes les phases de fonctionnement, dans la mesure où elle est régulée par le régulateur. La contrainte de large dynamique d'entrée est reportée sur le régulateur et les convertisseurs finaux travaillent en tension d'entrée constante.

Le principal inconvénient de cette architecture est le fait que le transfert de puissance entre le réseau primaire et les différentes tensions de sortie en régime permanent se fait à travers le régulateur. Ceci impacte fortement le rendement de la chaîne de conversion d'énergie totale car on a alors trois étages de convertisseurs.

Le but de l'invention est donc de résoudre ces problèmes.

A cet effet l'invention a pour objet un système de conversion d'énergie électrique du type comportant un convertisseur principal raccordé en entrée à au moins un réseau d'entrée fonctionnant sous une tension d'entrée et en sortie à un réseau de sortie fonctionnant sous une tension de sortie et associé à un dispositif de stockage d'énergie électrique, fonctionnant sous une tension de stockage, comportant un chargeur bidirectionnel raccordé d'une part au réseau de sortie et d'autre part à des moyens de stockage capacitif d'énergie électrique, le fonctionnement du chargeur bidirectionnel étant piloté par des moyens de commande pour asservir la tension de sortie à une première valeur de consigne, caractérisé en ce que le fonctionnement du convertisseur principal est piloté par des moyens de commande pour asservir la tension de stockage à une seconde valeur de consigne.

Selon d'autres aspects de l'invention, le système de conversion d'énergie électrique comprend l'une ou plusieurs des caractéristiques suivantes :
- le chargeur bidirectionnel comporte un redresseur synchrone commandé en mode de courant crête et à limitation de courant positive et négative et fonctionnant à fréquence fixe,
- les moyens de commande du fonctionnement du convertisseur principal comportent un régulateur proportionnel,
- la vitesse d'asservissement des moyens de commande du chargeur bidirectionnel est supérieure à celle des moyens de commande du convertisseur principal,
- il comporte des moyens d'isolation galvanique entre le réseau primaire et le réseau intermédiaire,
- les moyens d'isolement galvanique sont intégrés dans le convertisseur principal,
- les moyens d'isolement galvanique sont intégrés dans un conditionneur de réseau intégré dans le réseau de sortie,
- le réseau de sortie comporte deux portions séparées par des moyens formant commutateur et sur lesquels sont raccordées des charges distinctes,
- le réseau d'entrée est un réseau à courant continu, et
- le réseau d'entrée est un réseau à courant alternatif.

L'invention sera mieux comprise à l'aide de la description qui va suivre, donnée uniquement à titre d'exemple et faite en se référant aux dessins annexés, sur lesquels:
- la figure 1 représente un schéma synoptique illustrant la structure d'un premier exemple de réalisation d'un système de conversion de l'état de la technique,
- les figures 2 et 3 illustrent la transparence d'un tel système aux microcoupures du réseau d'énergie primaire,
- les figures 4 et 5 illustrent la fonction de filtrage passe-bas d'un tel système,
- la figure 6 représente un schéma synoptique illustrant une autre structure d'un système de conversion de l'état de la technique,
- la figure 7 illustre encore un autre mode de réalisation d'un système de conversion de l'état de la technique,
- la figure 8 représente un schéma synoptique d'encore un autre mode de réalisation d'un système de conversion de l'état de la technique,
- la figure 9 représente un schéma synoptique illustrant un système de conversion selon l'invention,
- la figure 10 illustre de façon plus détaillée ce système de conversion selon l'invention,
- les figures 11 à 14 illustrent la charge de la réserve d'énergie d'un tel système,
- les figures 15 à 18 illustrent la décharge de cette réserve d'énergie,
- les figures 19 à 23 illustrent le fonctionnement d'un tel convertisseur en cas d'appel de courant, et
- les figures 24, 25 et 26 illustrent différentes variantes de réalisation d'un système de conversion selon l'invention.

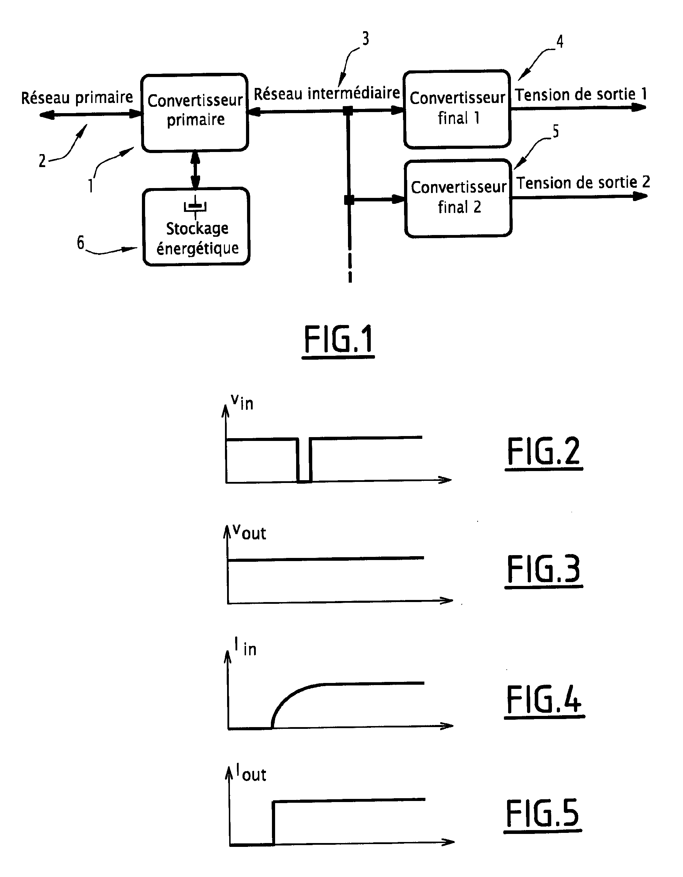

On a en effet illustré sur la figure 1 un premier exemple de réalisation d'un système de conversion d'énergie de l'état de la technique.

Celui-ci comporte de façon classique un convertisseur primaire désigné par la référence générale 1, raccordé en entrée à un réseau primaire d'alimentation ou d'entrée désigné par la référence générale 2 et en sortie à un réseau intermédiaire ou de sortie désigné par la référence générale 3, lui-même raccordé à des convertisseurs finaux respectivement 4 et 5.

Ceux-ci délivrent alors les tensions de sortie correspondantes.

Le convertisseur primaire 1 est quant à lui associé à des moyens de stockage d'énergie désignés par la référence générale 6.

Une telle structure permet d'obtenir, comme cela est illustré sur les figures 2 et 3, une transparence aux microcoupures du réseau d'énergie primaire. L'énergie permettant cette caractéristique est stockée dans le dispositif capacitif de stockage d'énergie électrique 6.

De même et comme cela est illustré sur les figures 4 et 5, une telle structure permet d'obtenir un filtrage passe-bas, c'est-à-dire un moyennage des appels de courants générés par les convertisseurs finaux 4 et 5, à l'aide de ce même dispositif capacitif de stockage d'énergie.

Comme cela a été indiqué précédemment, ceci empêche la pollution du réseau d'énergie primaire par des appels de courant de fréquence trop élevée.

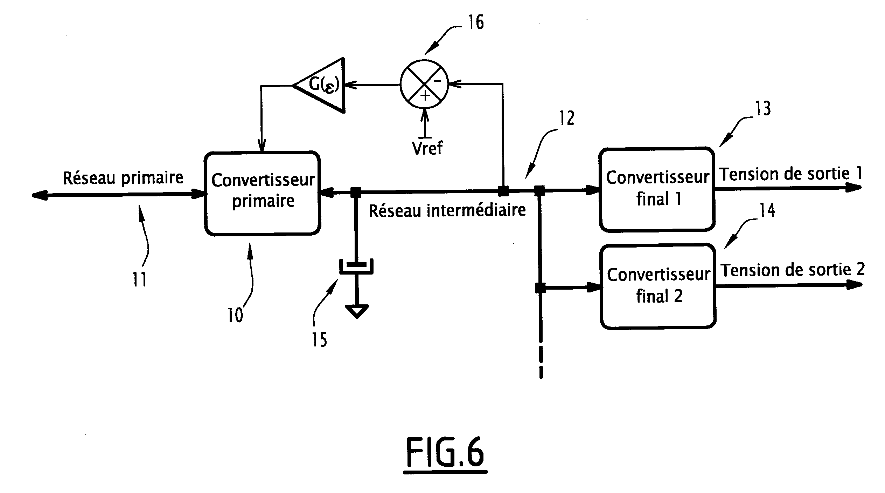

Sur la figure 6, on a illustré un autre exemple de réalisation d'un système de conversion de l'état de la technique.

Celui-ci comporte toujours un convertisseur primaire 10 dont l'entrée est raccordée à un réseau d'entrée 11 et dont la sortie est raccordée à un réseau de sortie désigné par la référence générale 12.

Des convertisseurs finaux, respectivement 13 et 14, sont raccordés à ce réseau de sortie et délivrent des tensions de sortie correspondantes.

Un dispositif de stockage capacitif d'énergie est directement placé sur le réseau de sortie 12, ce dispositif de stockage étant désigné par la référence générale 15.

La tension du réseau de sortie est asservie par des moyens de régulation désignés par la référence générale 16, à une tension de référence par commande du convertisseur primaire 10.

Comme cela a été indiqué précédemment, une telle structure présente également un certain nombre d'inconvénients, concernant en particulier l'utilisation du dispositif capacitif de stockage d'énergie à son optimum de densité énergétique, la tension du réseau de sortie qui ne peut pas être trop basse afin d'obtenir une bonne densité énergétique du dispositif capacitif de stockage d'énergie et enfin du fait que le convertisseur primaire doit disposer d'une caractéristique de sortie à puissance constante sur toute sa gamme de tension de sortie pour pouvoir recharger la réserve d'énergie tout en fournissant la puissance utile en fin de microcoupure.

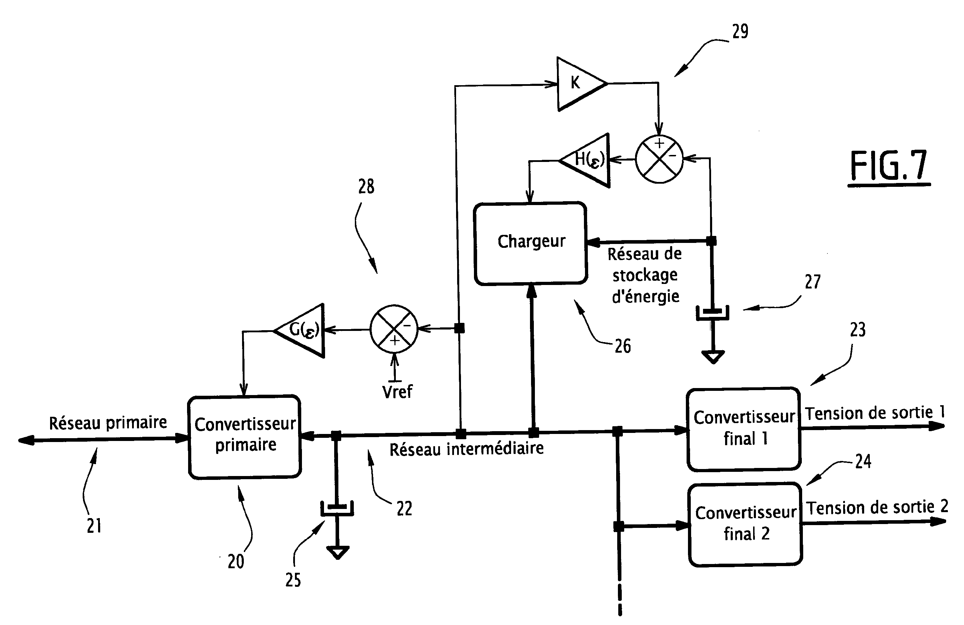

Sur la figure 7, on a illustré un schéma synoptique d'un autre mode de réalisation d'un système de conversion de l'état de la technique tel que par exemple celui décrit dans le document FR 2 895 167 mentionné précédemment.

Celui-ci comporte toujours un convertisseur primaire, désigné par la référence générale 20, dont l'entrée est raccordée à un réseau d'entrée, désigné par la référence générale 21 et dont la sortie est raccordée à un réseau de sortie 22.

Des convertisseurs finaux respectivement 23 et 24 sont raccordés à ce réseau de sortie 22 et délivrent des sorties correspondantes.

Des premiers moyens de stockage d'énergie électrique désignés par la référence générale 25 sont connectés à ce réseau de sortie 22.

Ce réseau de sortie 22 est également raccordé à un chargeur bidirectionnel désigné par la référence générale 26, associé à des seconds moyens de stockage d'énergie électrique désignés par la référence 27.

Des moyens de régulation interposés entre le réseau de sortie 22 et le convertisseur primaire 20 et le chargeur 26 et le réseau de stockage d'énergie permettent de réguler et de piloter l'ensemble.

Ces moyens de régulation sont désignés par les références générales 28 et 29 respectivement.

Comme cela a été indiqué précédemment, cette solution non plus n'est pas optimale car elle ajoute un convertisseur à un ensemble déjà complexe et laisse entier le problème de la dynamique d'entrée des convertisseurs finaux.

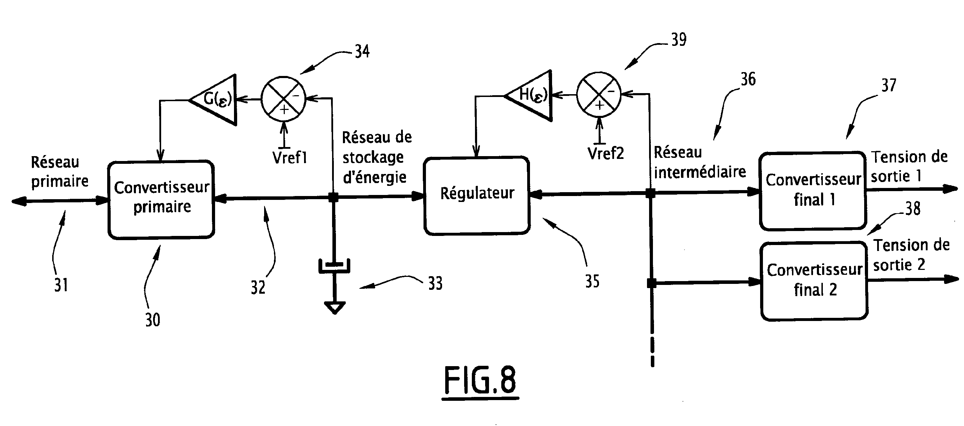

Une autre solution proposée dans l'état de la technique et illustrée sur la figure 8, consiste à placer la réserve d'énergie sur un étage intermédiaire et à réguler le réseau de sortie à l'aide d'un convertisseur monodirectionnel ou bidirectionnel également appelé régulateur.

C'est ainsi que l'on reconnaît sur cette figure 8, un convertisseur primaire désigné par la référence générale 30 raccordé en entrée à un réseau d'entrée 31 et dont la sortie est associée à un réseau de stockage d'énergie 32, raccordé à des moyens de stockage d'énergie électrique 33.

Le convertisseur 30 est associé à des moyens de régulation, désignés par la référence générale 34, de la tension de ce réseau de stockage d'énergie sur une tension de référence.

Ce réseau de stockage d'énergie est également couplé à un régulateur 35 dont la sortie est raccordée à un réseau de sortie, désigné par la référence générale 36, raccordé à des convertisseurs finaux 37 et 38 respectivement, délivrant des sorties correspondantes.

Des moyens de régulation désignés par la référence générale 39 permettent de piloter le régulateur 35 pour réguler la tension du réseau de sortie sur une autre tension de référence.

Cependant, cette solution également présente un certain nombre d'inconvénients comme indiqué précédemment.

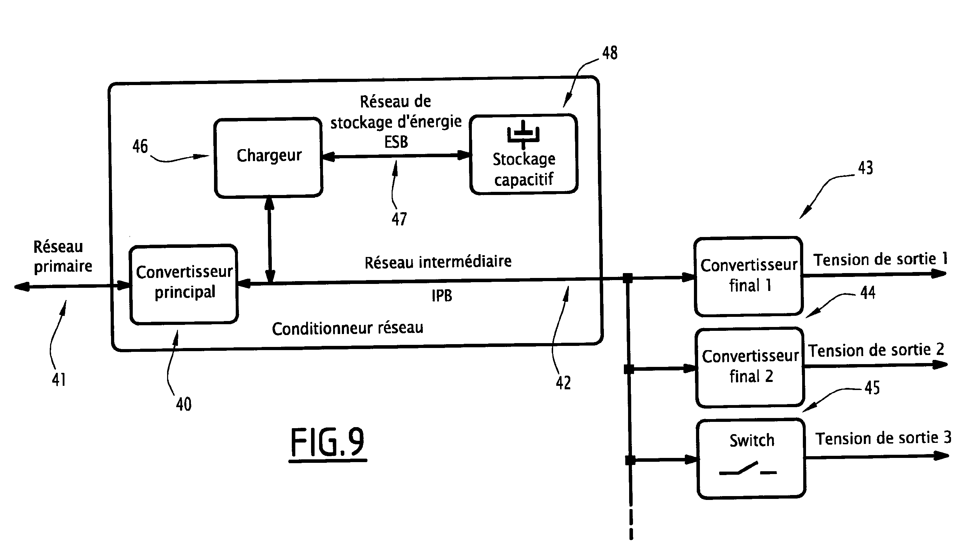

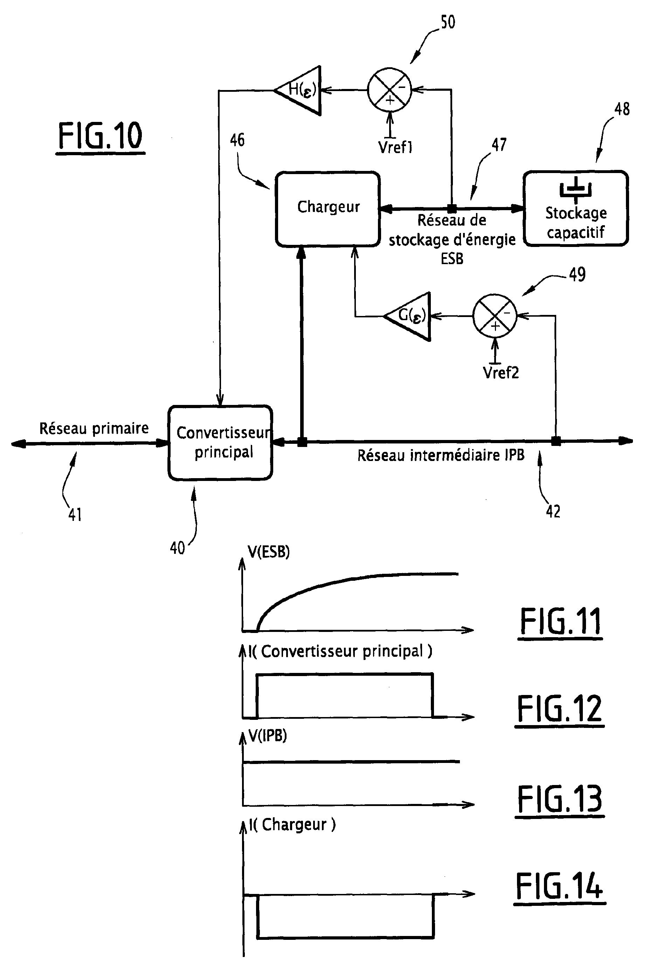

On a illustré sur les figures 9 et 10 un exemple de réalisation d'un système de conversion d'énergie électrique selon l'invention.

Des numéros de référence identiques désignent des organes identiques représentés sur ces deux figures.

C'est ainsi que l'on reconnaît sur ces figures 9 et 10, un système de conversion qui comporte un convertisseur principal désigné par la référence générale 40 dont l'entrée est associée à un réseau d'entrée 41 fonctionnant sous une tension d'entrée.

La sortie de ce convertisseur principal 40 est associée à un réseau de sortie de puissance également appelé réseau IPB pour « Intermediate Power Bus », ce réseau étant désigné par la référence générale 42 et fonctionnant sur une tension de sortie.

Ce réseau est raccordé à des convertisseurs finaux 43 et 44 par exemple, délivrant des sorties correspondantes ou encore à un commutateur tel que par exemple celui désigné par la référence générale 45.

Le réseau de sortie IPB 42 est également associé à un chargeur bidirectionnel désigné par la référence générale 46, lui-même raccordé à un réseau de stockage d'énergie électrique désigné par la référence générale 47, raccordé à un dispositif de stockage capacitif d'énergie électrique 48, et fonctionnant sur une tension de stockage.

Différentes régulations sont mises en oeuvre comme cela est illustré plus clairement sur la figure 10.

Ainsi le chargeur 46 est associé à des moyens d'asservissement à la tension du réseau de sortie IPB, ces moyens étant désignés par la référence générale 49.

Ceci permet alors d'asservir la tension de sortie de celui-ci, c'est-à-dire la tension du réseau de sortie à une première valeur de consigne par exemple V_{ref2}.

Une autre boucle de régulation concerne le convertisseur principal 40 qui est lui asservi à la tension du réseau de stockage d'énergie 47 par l'intermédiaire de moyens correspondants désignés par la référence générale 50.

Le convertisseur principal 40 est alors piloté par des moyens de commande pour asservir la tension de stockage à une seconde valeur de consigne telle que par exemple désignée par V_{ref1}.

On conçoit alors que la structure générale d'un tel système de conversion comporte un réseau de sortie nommé IPB régulé à une tension continue et constante. Sur ce réseau sont connectés les convertisseurs finaux transformant la tension de ce réseau en sorties distribuées à des moyens électroniques de façon classique.

La tension du réseau de stockage d'énergie est variable suivant les phases de fonctionnement. Sur ce réseau sont connectés les composants capacitifs de stockage d'énergie.

Le système selon l'invention comporte également un convertisseur principal transférant l'énergie du réseau d'entrée au réseau de sortie et un chargeur bidirectionnel transférant l'énergie du réseau de sortie au réseau de stockage d'énergie pour les phases de charge de la réserve d'énergie et dans le sens inverse pour les phases de décharge de celle-ci.

Ce chargeur peut par exemple être formé par un convertisseur de type abaisseur également connu sous le nom de convertisseur « buck » réversible et à redressement synchrone, commandé en mode courant crête avec limitation de courant positive et négative et à fréquence fixe par exemple.

Le fonctionnement d'une telle configuration peut être illustré en étudiant les différentes phases de fonctionnement de celui-ci.

Ainsi par exemple sur les figures 11, 12, 13 et 14, on a illustré la phase de fonctionnement correspondant à la charge de la réserve d'énergie.

Cette phase correspondant par exemple au démarrage ou au retour du réseau après une microcoupure.

La tension V(ESB) c'est-à-dire celle du réseau de stockage d'énergie étant inférieure à la valeur de consigne correspondante, c'est-à-dire V_{ref1}, le correcteur d'erreur 50 ordonne au convertisseur principal 40 de transférer de l'énergie vers le réseau de sortie IPB 42.

Un surplus d'énergie étant transféré à ce réseau de sortie, sa tension a tendance à augmenter. Cette augmentation est détectée par le correcteur 49 qui ordonne au chargeur de transférer de l'énergie du réseau de sortie 42 vers le réseau de stockage d'énergie 47 (figures 13 et 14).

On a ainsi un transfert d'énergie du réseau d'entrée 41 vers le réseau de stockage d'énergie 47 à travers le convertisseur 40 et le chargeur 46.

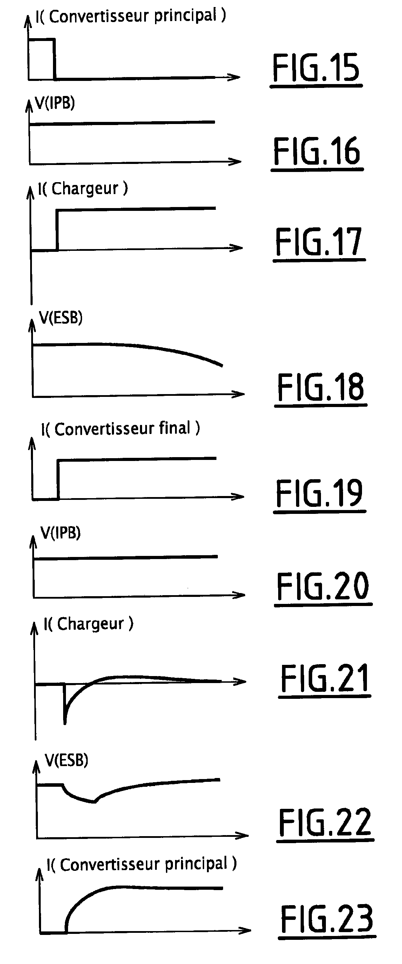

Les figures 15, 16, 17 et 18 correspondent quant à elles à la décharge de la réserve d'énergie.

Cette décharge correspond par exemple à une microcoupure du réseau d'entrée 41.

Dans ce cas, le convertisseur principal 40 ne fournissant plus d'énergie au réseau de sortie 42, la tension de celui-ci a tendance à décroître.

Cette diminution est détectée par le correcteur 49, qui ordonne au chargeur 46 de transférer de l'énergie du réseau de stockage d'énergie 47 vers le réseau de sortie 42.

La tension du réseau de stockage d'énergie 47 décroît alors naturellement, en fonction du courant fourni au réseau de sortie 42, du rendement du chargeur 46 et de la capacité de stockage d'énergie des composants capacitifs 48 connectés à celui-ci.

En cas d'appel de courant comme cela est illustré sur les figures 19, 20, 21, 22 et 23, par exemple lorsque l'un des convertisseurs finaux fait un appel de courant brutal ou périodique de fréquence élevée sur le réseau de sortie 42, l'appel de courant sur ce réseau fait décroître la tension de celui-ci.

Cette diminution est détectée par le correcteur 49 qui ordonne au chargeur 46 de transférer de l'énergie du réseau de stockage d'énergie 47 vers le réseau de sortie 42.

Du fait de ce transfert d'énergie, la tension du réseau de stockage d'énergie 47 décroît.

Cette diminution est détectée par le correcteur d'erreur 50, qui ordonne au convertisseur principal 40 de transférer de l'énergie du réseau d'entrée 41 vers le réseau de sortie 42. La tension du réseau de sortie 42 a alors tendance à augmenter, tendance qui est détectée par le correcteur 49 qui ordonne au chargeur 46 de transférer de l'énergie du réseau d'entrée 42 vers le réseau de stockage d'énergie 47, rechargeant ainsi la réserve d'énergie 48.

On conçoit que la boucle intégrant le régulateur régule la puissance fournie par le chargeur 46 à partir de la tension du réseau de sortie 42 et assure la réponse à haute fréquence sous appel de courant.

Ces appels de courant sont alors filtrés et moyennés par l'impédance du stockage d'énergie capacitif 48.

La boucle intégrant le régulateur 50 régule quant à elle la puissance fournie par le convertisseur principal 40 à partir de la tension du réseau de stockage d'énergie 47 et assure ainsi la réponse au courant moyenné des convertisseurs finaux.

La boucle intégrant le régulateur 50 peut être volontairement réglée lente, de façon à amplifier le phénomène de filtrage. Ce filtrage peut également être diminué en fréquence en augmentant la valeur de la capacité du dispositif de stockage d'énergie 48.

D'une façon générale, la vitesse d'asservissement des moyens de commande du chargeur est supérieure à celle des moyens de commande du convertisseur principal.

Le régulateur 50 peut par exemple être un simple régulateur proportionnel en basse fréquence, ce qui permet de régler plus facilement la boucle dans les cas où la valeur de la capacité du dispositif de stockage d'énergie 48 est ajustable.

Des éléments complémentaires peuvent être envisagés tels que par exemple des moyens d'isolation galvanique.

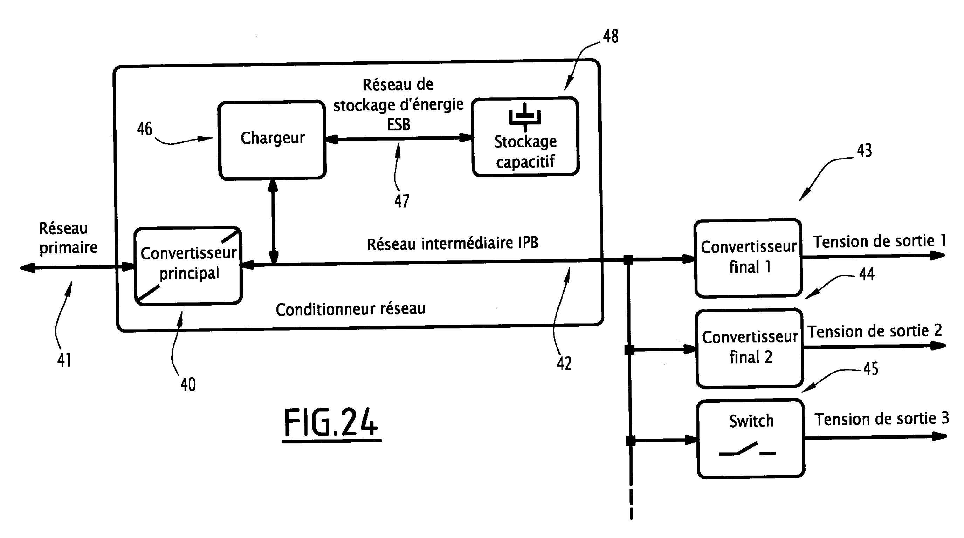

Ceci est par exemple illustré sur la figure 24 sur laquelle on reconnaît le convertisseur principal 40, le réseau d'entrée 41, le réseau de sortie 42, le chargeur 46, le réseau de stockage d'énergie 47, les moyens de stockage capacitif 48 et les organes de sortie tels que les convertisseurs 43 et 44 et le commutateur 45.

Un moyen d'isolation galvanique peut alors être intégré dans le convertisseur principal 40, le réseau de sortie 42, le chargeur 46, le réseau de stockage d'énergie 47, les moyens de stockage capacitif 48 et les organes de sortie 43 à 45 étant alors isolés galvaniquement du réseau d'entrée 41.

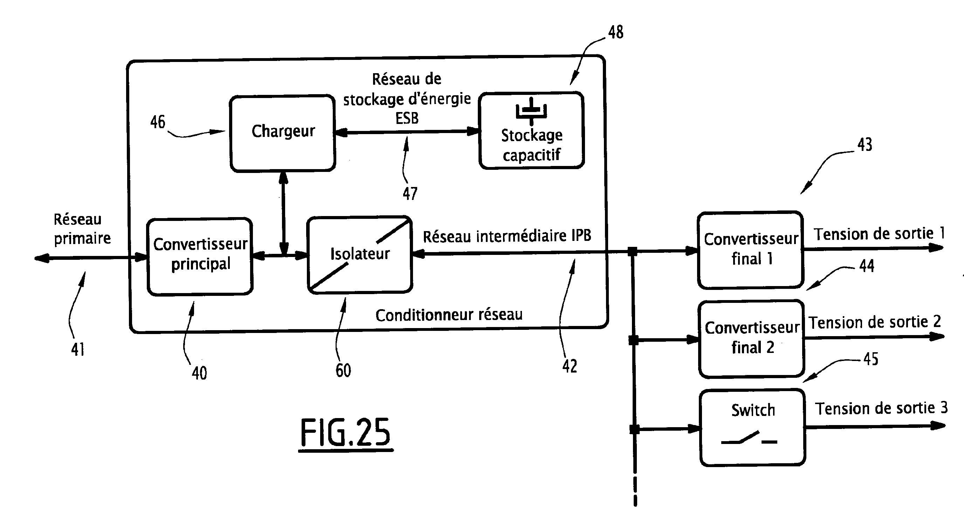

Cependant, et comme cela est illustré sur la figure 25, sur laquelle des numéros de référence identiques désignent des éléments identiques ou analogues à ceux déjà décrits, un isolateur désigné par la référence 60, peut également être intégré en sortie du convertisseur principal 40. Cet isolateur délivre alors en sortie le réseau sortie 42.

Le réseau d'entrée 41, le convertisseur principal 40, la réserve d'énergie 48, son réseau 47 et son chargeur 46 sont alors isolés galvaniquement du réseau de sortie 42 et des organes de sortie 43 à 45.

Bien entendu une extension de cette architecture peut par exemple comporter deux réserves d'énergie, l'une au primaire et l'autre au secondaire d'un tel système d'isolation galvanique.

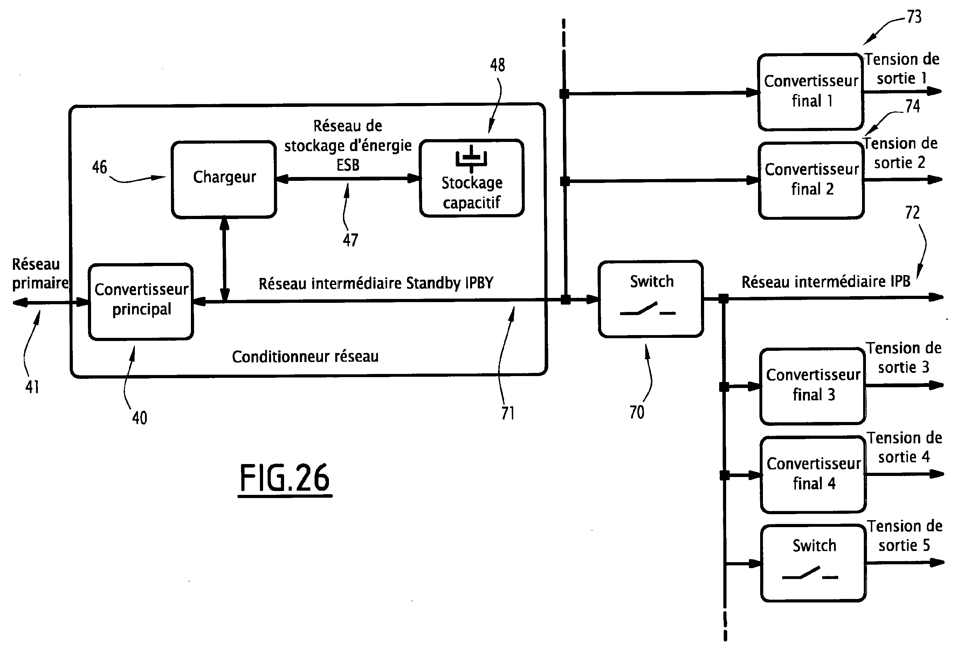

De même, et comme cela est illustré sur la figure 26, le réseau de sortie peut être coupé en deux en utilisant un commutateur tel que le commutateur désigné par la référence générale 70. Dans ce cas, le réseau de sortie se présente sous la forme de deux portions de sortie, respectivement 71 et 72.

L'une de ces portions telles que par exemple la portion 71 peut par exemple être réservée à certains convertisseurs finaux tels que les convertisseurs 73 et 74 tandis que l'autre portion de réseau de sortie 72 est quant à elle réservée à d'autres convertisseurs.

En particulier, les convertisseurs 73 et 74 peuvent être des convertisseurs actifs en mode veille.

Ce mode veille requiert en général une très faible puissance de sortie et le chargeur 46 peut alors implémenter un mode de basse consommation en modifiant son mode de fonctionnement et en permettant d'adapter ses performances aux contraintes d'un tel mode de fonctionnement.

Ainsi par exemple dans le type d'applications envisagées, le chargeur 46 peut disposer d'un mode à basse puissance permettant de :
- diminuer la fréquence de découpage et ainsi de diminuer les pertes de commande des interrupteurs et les pertes par commutation,
- désactiver le redressement synchrone rendant le convertisseur unidirectionnel et autorisant la conduction discontinue pour diminuer les pertes dans l'inductance et les pertes associées à l'interrupteur qui n'est plus commandé,
- avoir une transition « à la volée » du mode à pleine puissance au mode à puissance réduite et inversement, sans impact sur la tension du réseau de sortie,
- avoir une adaptation « à la volée » du correcteur d'erreur 49 asservissant le chargeur à la tension du réseau de sortie, et
- commander ce nouveau mode de contrôle en mode tension, avec une génération de rampe proportionnelle à la tension du réseau de stockage d'énergie, la consigne issue du correcteur 42 correspondant étant ainsi affranchie de sa dépendance envers la tension du réseau de stockage d'énergie.

On conçoit alors qu'un tel système de conversion d'énergie présente un certain nombre d'avantages.

En cas de coupure du réseau d'entrée, il n'y a pas de commutation de mode et le réseau de sortie possède les mêmes caractéristiques qu'en fonctionnement normal.

Lors des appels de courant sur le réseau de sortie, ils sont tout d'abord transmis par le chargeur aux moyens de stockage capacitif qui les filtrent par leurs caractéristiques courant/tension (impédance des condensateurs électrolytiques) avant d'être reflétés par le convertisseur principal au réseau d'entrée.

Les pannes deviennent détectables en fonctionnement normal, tous les convertisseurs sont en fonction et il n'y a pas de système commuté. Une panne d'une fonction se traduit alors par une tension de sortie erronée sur un réseau. Les pannes peuvent alors être détectées par les fonctions de diagnostic classiques.

La régulation du réseau de sortie y est optimale quelles que soient les phases de fonctionnement y compris pendant les transitions de phases.

Le réseau de sortie possède une tension fixe et constante dans toutes les phases de fonctionnement, ce qui simplifie la conception des convertisseurs finaux. Cette conception des convertisseurs finaux est également optimisée en terme de rendement.

Le découpage par blocs ainsi proposé présente également des avantages conséquents :
- la tension du réseau de stockage d'énergie est facilement ajustable selon les besoins car il suffit de modifier la boucle d'asservissement intégrant le régulateur 50 et les éléments de puissance du chargeur. Il n'y a pas d'impact sur le convertisseur d'entrée ni sur les convertisseurs finaux.
- l'architecture peut facilement être adaptée pour la gestion de l'isolement galvanique. Soit la réserve d'énergie est placée au secondaire d'un tel isolement et cet isolement est réalisé dans le convertisseur principal, soit la réserve d'énergie est placée au primaire et l'isolement est réalisé par un convertisseur isolateur bidirectionnel placé avant les convertisseurs finaux.

Cette conception peut être également transposée pour une entrée de réseau alternative ou continue en modifiant uniquement le convertisseur principal, sans avoir d'impact sur le reste des convertisseurs.

## Revendications

1. Système de conversion d'énergie électrique du type comportant un convertisseur principal (40) raccordé en entrée à au moins un réseau d'entrée (41) fonctionnant sous une tension d'entrée et en sortie à un réseau de sortie (42) fonctionnant sous une tension de sortie et associé à un dispositif de stockage d'énergie électrique, fonctionnant sous une tension de stockage, comportant un chargeur bidirectionnel (46) raccordé d'une part au réseau de sortie (42) et d'autre part à des moyens de stockage capacitif d'énergie électrique (48), le fonctionnement du chargeur bidirectionnel (46) étant piloté par des moyens de commande (49) pour asservir la tension de sortie à une première valeur de consigne (V_{réf 2}), **caractérisé en ce que** le fonctionnement du convertisseur principal (40) est piloté par des moyens de commande (50) pour asservir la tension de stockage à une seconde valeur de consigne (V_{réf 1}).

2. Système de conversion d'énergie électrique selon la revendication 1, **caractérisé en ce que** le chargeur bidirectionnel (46) comporte un redresseur synchrone commandé en mode de courant crête et à limitation de courant positive et négative et fonctionnant à fréquence fixe.

3. Système de conversion d'énergie électrique selon la revendication 2, **caractérisé en ce que** les moyens de commande (50) du fonctionnement du convertisseur principal (40) comportent un régulateur proportionnel.

4. Système de conversion d'énergie électrique selon l'une quelconque des revendications précédentes, **caractérisé en ce que** la vitesse d'asservissement des moyens de commande (49) du chargeur bidirectionnel (46) est supérieure à celle des moyens de commande (50) du convertisseur principal (40).

5. Système de conversion d'énergie électrique selon l'une quelconque des revendications précédentes, **caractérisé en ce qu'**il comporte des moyens d'isolation galvanique entre le réseau d'entrée (41) et le réseau de sortie (42).

6. Système de conversion d'énergie électrique selon la revendication 5, **caractérisé en ce que** les moyens d'isolement galvanique sont intégrés dans le convertisseur principal (40).

7. Système de conversion d'énergie électrique selon la revendication 5, **caractérisé en ce que** les moyens d'isolement galvanique sont intégrés dans un isolateur (60) intégré dans le réseau de sortie.

8. Système de conversion d'énergie électrique selon l'une quelconque des revendications précédentes, **caractérisé en ce que** le réseau de sortie comporte deux portions (71, 72) séparées par des moyens formant commutateur (70) et sur lesquels sont raccordées des charges distinctes.

9. Système de conversion d'énergie électrique selon l'une quelconque des revendications précédentes, **caractérisé en ce que** le réseau d'entrée est un réseau à courant continu.

10. Système de conversion d'énergie électrique selon l'une quelconque des revendications 1 à 8, **caractérisé en ce que** le réseau d'entrée est un réseau à courant alternatif.

## Patentansprüche

1. System zum Umwandeln von elektrischer Energie des Typs, der einen Primärwandler (40) aufweist, der eingangsseitig mit mindestens einem Eingangsnetzwerk (41), das mit einer Eingangsspannung arbeitet, verbunden ist, und ausgangsseitig mit einem Ausgangsnetzwerk (42) verbunden ist, das mit einer Ausgangsspannung arbeitet, und dem eine Speichervorrichtung für elektrische Energie zugeordnet ist, die mit einer Speicherspannung arbeitet, einen bidirektionalen Lader (46) aufweist, der einerseits mit dem Ausgangsnetzwerk (42) und andererseits mit Mitteln zum kapazitiven Speichern von elektrischer Energie (48) verbunden ist, wobei die Funktion des bidirektionalen Laders (46) von Mitteln zum Steuern (49) für das Regeln der Ausgangsspannung auf einen ersten Sollwert (V_{ref 2}) gesteuert wird, dadurch charakterisiert, dass die Funktion des Primärwandlers (40) durch Mittel zum Steuern (50) für das Regeln der Speicherspannung auf einen zweiten Sollwert (V_{ref 1}) gesteuert wird.

2. System zum Umwandeln von elektrischer Energie gemäß Anspruch 1, dadurch charakterisiert, dass der bidirektionale Lader (46) einen Synchrongleichrichter aufweist, der in einem Spitzenstrommodus gesteuert wird, eine positive und negative Strombegrenzung hat und bei einer festen Frequenz arbeitet.

3. System zum Umwandeln von elektrischer Energie gemäß Anspruch 2, dadurch charakterisiert, dass die Mittel zum Steuern (50) der Funktion des Primärwandlers (40) einen Proportionalregler aufweisen.

4. System zum Umwandeln von elektrischer Energie gemäß einem der vorhergehenden Ansprüche, dadurch charakterisiert, dass die Regelgeschwindigkeit der Mittel zum Steuern (49) des bidirektionalen Laders (46) höher ist als die der Mittel zum Steuern (50) des Primärwandlers (40).

5. System zum Umwandeln von elektrischer Energie gemäß einem der vorhergehenden Ansprüche, dadurch charakterisiert, dass es Mittel zur galvanischen Isolation zwischen dem Eingangsnetzwerk (41) und dem Ausgangsnetzwerk (42) aufweist.

6. System zum Umwandeln von elektrischer Energie gemäß Anspruch 5, dadurch charakterisiert, dass die Mittel zur galvanischen Isolation in dem Primärwandler (40) integriert sind.

7. System zum Umwandeln von elektrischer Energie gemäß Anspruch 5, dadurch charakterisiert, dass die Mittel zur galvanischen Isolation in einen Isolator (60), der in das Ausgangsnetzwerk integriert ist, integriert sind.

8. System zum Umwandeln von elektrischer Energie gemäß einem der vorhergehenden Ansprüche, dadurch charakterisiert, dass das Ausgangsnetzwerk zwei Teile (71, 72) aufweist, die durch Mittel, die einen Schalter (70) bilden, getrennt sind und die mit unterschiedlichen Lasten verbunden sind.

9. System zum Umwandeln von elektrischer Energie gemäß einem der vorhergehenden Ansprüche, dadurch charakterisiert, dass das Eingangsnetzwerk ein Gleichstromnetzwerk ist.

10. System zum Umwandeln von elektrischer Energie gemäß einem der Ansprüche 1 bis 8, dadurch charakterisiert, dass das Eingangsnetzwerk ein Wechselstromnetzwerk ist.

## Claims

1. An electric energy conversion system of the type including a main converter (40) connected at the input to at least one input network (41) operating under an input voltage and at the output to an output network (42) operating under an output voltage and associated with a device for storing electric energy, operating under a storage voltage, including a bidirectional charger (46) connected to the output network (42) on the one hand and to capacitive electrical energy storage means (48) on the other hand, the operation of the bidirectional charger (46) being driven by control means (49) for slaving the output voltage on a first set value (V_{ref2}), **characterized in that** the operation of the main converter (40) is driven by control means (50) for slaving the storage voltage on a second set value (V_{ref1}).

2. The electrical energy conversion system according to claim 1, **characterized in that** the bidirectional charger (46) includes a synchronous rectifier controlled in a peak current mode and with positive and negative current limitation and operating at a set frequency.

3. The electric energy conversion system according to claim 2, **characterized in that** the means (50) for controlling the operation of the main converter (40) include a proportional regulator.

4. The electric energy conversion system according to any of the preceding claims, **characterized in that** the slaving rate of the means (49) for controlling the bidirectional charger (46) is greater than that of the means (50) for controlling the main converter (40).

5. The electric energy conversion system according to any of the preceding claim, **characterized in that** it includes galvanic insulation means between the input network (41) and the output network (42).

6. The electric energy conversion system according to claim 5, **characterized in that** the galvanic insulation means are integrated into the main converter (40).

7. The electric energy conversion system according to claim 5, **characterized in that** the galvanic insulation means are integrated into an insulator (60) integrated into the output network.

8. The electric energy conversion system according to any of the preceding claims, **characterized in that** the output network includes two portions (71, 72) separated by means forming a switch (70) and to which are connected distinct loads.

9. The electric energy conversion system according to any of the preceding claims, **characterized in that** the input network is a DC network.

10. The electric energy conversion system according to any of claims 1 to 8, **characterized in that** the input network is an AC network.
